Europäisches Patentamt

European Patent Office

Office européen des brevets

(19)

(11) Publication number: 0 461 730 A1

## EUROPEAN PATENT APPLICATION

(12)

(21) Application number: 91201589.8

(51) Int. Cl.⁵: $G01J \ 1/42$

(22) Date of filing: 17.06.91

(30) Priority: 15.06.90 NL 9001372

(43) Date of publication of application:
18.12.91 Bulletin 91/51

(84) Designated Contracting States:
AT BE CH DE DK ES FR GB GR IT LI LU NL SE

(71) Applicant: INTERUNIVERSITAIR
MICROELEKTRONICA CENTRUM VZW
Kapeldreef 75
B-3030 Leuven-Heverlee (BE)

(72) Inventor: Meas, Herman Emile Maria
Kwakkelbosstraat 26
B-3360 Bierbeek (BE)
Inventor: Willems, Geert Julien Fernand
Roger
Bollostraat 18
B-2220 Heist-op-den-Berg (BE)

(74) Representative: Land, Addick Adrianus
Gosling et al
OCTROOIBUREAU ARNOLD & SIEDSMA
Sweelinckplein 1
NL-2517 GK Den Haag (NL)

(54) A method and a system for measuring the power distribution of a radiation beam.

(57) Method for measuring spatial power distribution of a high power radiation beam, such as a laser beam of 20 watt and an intensity of 0.5 megawatt per $cm^2$, wherein the radiation beam falls unattenuated on a pin-hole and a radiation detector placed therebehind at a predetermined distance and wherein the pin-hole and radiation detector are together moved two dimensionally relative to the radiation beam.

EP 0 461 730 A1

FIG.1

With many radiation sources, in particular high power lasers, it is important to measure the spot size and/or the intensity profile, for example for processing materials with such, usually focussed, beams.

The present invention provides a method and a system according to claim 1 and 2 respectively.

A radiation beam can be scanned herewith in accurate manner and the profile thereof determined.

Existing methods and systems, such as for instance described in the American patent 4.848.902 require attenuating means to be able to measure the radiation beam using a detector.

According to the present invention the radiation beam is attenuated to a sufficient extent as a result of an adequate pin-hole and a sufficiently large distance between pin-hole and detector, wherein it is avoided that, due to filters and the like, local influences of such attenuating means are not reflected in the measuring results.

In preference a pin-hole in aluminium foil is employed because of the small absorption of visible light and the high thermal conductivity.

Further advantages, features and details will become apparent in the light of a description of a preferred embodiment of the present invention with reference to the annexed drawing, in which:

fig. 1 shows a partly perspective, partly schematic view of an embodiment; and

fig. 2 and 3 show graphic results as obtained with the embodiment of fig. 1.

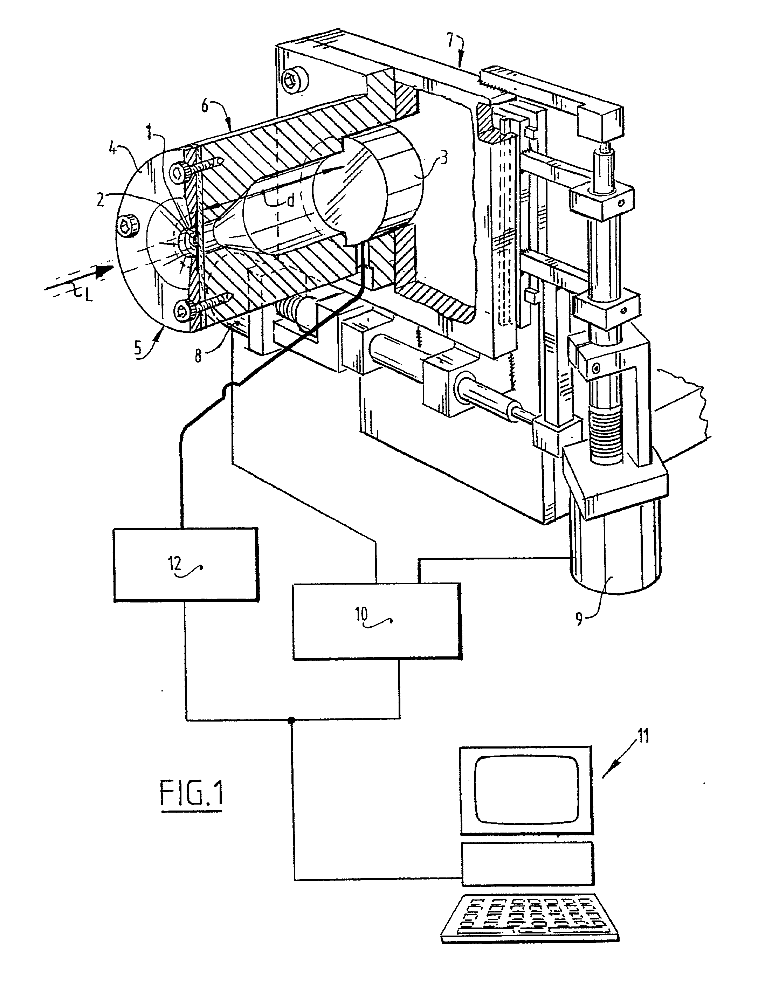

The schematically designated laser beam L (fig. 1) falls onto an aluminium foil 1 provided with a hole 2 of for instance a diameter in the order of magnitude of several micrometers.

At a distance d, which is dependent on the size of the hole - in accordance with the formulae of the diffraction theory of light - is arranged a detector 3, in the present case at approximately 1 cm. The aluminium foil 1 - together with a cover 4 designated as pin-hole unit 5 - is fixed to the housing 6 in front of the detector 3 and this entity is fixed to a holder 7 which, using two electro-motors 8 and 9, is movable in respectively horizontal and vertical direction, preferably in steps of 1 $\mu$m for scanning the profile of the laser beam L. The stepping motors 8 and 9 are connected to a drive unit 10 which is connected in turn to a personal computer or peripheral device 11, to which is also connected a digital meter 12 for measuring the power coming from the detector 3.

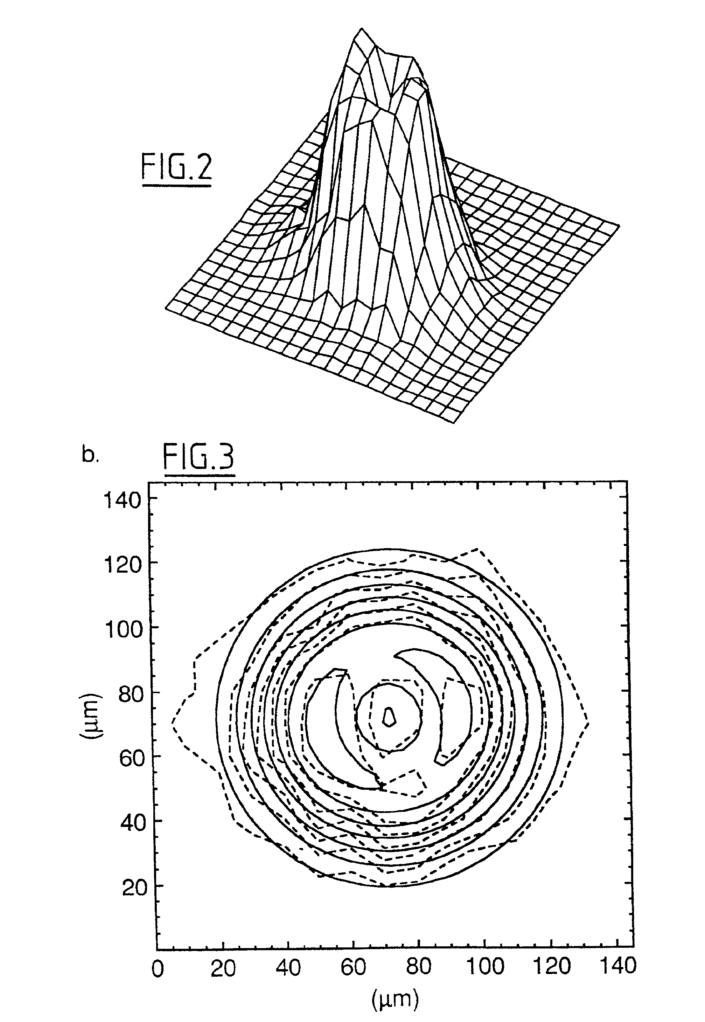

Fig. 2 and 3 show examples of presentations on a monitor or writer of experiments performed using the embodiment shown in fig. 1. In fig. 2 the distance between two successive lines is 10 $\mu$m, wherein the two-dimensionally projected hill indicates the profile, wherein the height in a determined region is proportional to the intensity of the laser beam. The graph of fig. 3 indicates the same measurement, but plotted in a different way, wherein the full lines designate a theoretical model for the beam while the broken lines designate the actually measured profile. The lines link points of equal intensity level.

By selecting according to the present invention the distance between pin-hole and detector subject to the size of the hole, a desired and necessary attenuating of the laser beam passing through the pin-hole could be obtained, for example six orders of magnitude smaller.

By opting for a thick aluminium foil, in the embodiment shown 35 $\mu$m, sufficient heat discharge became possible with a laser beam with a total power of 20 watt and an intensity level in the order of magnitude of 1 megawatt per $cm^2$. The aluminium foil (melting point 660°C) remained in solid state and was not damaged. The thick aluminium foil has a sufficient degree of thermal conductivity.

The pin-hole of 2-3 $\mu$m diameter used enabled a resolution of two to three $\mu$m in two dimensions of the profile.

In order to obtain an accurately defined pin-hole use is preferably made of an excimer laser of high power for cutting therewith through the thick aluminium foil.

## Claims

1. Method for measuring spatial power distribution of a high power radiation beam, such as a laser beam of 20 watt and an intensity of 0.5 megawatt per $cm^2$, wherein the radiation beam falls unattenuated on a pin-hole and a radiation detector placed therebehind at a predetermined distance and wherein the pin-hole and radiation detector are together moved two dimensionally relative to the radiation beam.

2. System for measuring the spatial power distribution of a radiation beam of great power comprising:
   - a pin-hole unit;
   - a radiation detector placed at a predetermined distance behind the pin-hole unit; and
   - moving means for moving the pin-hole and the radiation detector two dimensionally.

3. Measuring system as claimed in claim 2, wherein the pin-hole unit comprises a hole in aluminium foil.

4. System as claimed in claim 3, wherein the aluminium foil has a thickness of more than 10 $\mu$m, preferably more than 20 $\mu$m and preferably approximately 35 $\mu$m.

5. System as claimed in claim 3 or 4, wherein the hole has a diameter in the order of magnitude of 1 µm and preferably 2 to 3 µm.

6. System as claimed in claim 5, wherein the predetermined distance between pin-hole and detector amounts to roughly 4 cm.

FIG.1

FIG.2

b. FIG.3

European Patent Office

**EUROPEAN SEARCH REPORT**

Application Number

EP 91 20 1589

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 865 446 (TAKEMI INOUE ET AL.) <br> * column 4, line 26 - line 36; claims 1-4 * | 1,2,5 | G01J1/42 |
| X | PATENT ABSTRACTS OF JAPAN <br> vol. 11, no. 253 (P-606)(2700) August 18, 1987 <br> & JP-A-62 59 820 (MITSUBISHI ELECTRIC CORP. ) <br> March 16, 1987 <br> * the whole document * | 1,2 | |
| X | PATENT ABSTRACTS OF JAPAN <br> vol. 5, no. 134 (P-77)(806) August 26, 1981 <br> & JP-A-56 70 429 (NIPPON DENKI K.K. ) June 12, 1981 <br> * the whole document * | 1,2 | |
| A | REVIEW OF SCIENTIFIC INSTRUMENTS <br> vol. 59, no. 11, 1988, NEWYORK,US <br> pages 2384 - 2385; <br> T.INOUE ET AL.: 'LASER POWER METER WITH AN INTEGRAL ALIGNMENT MODULE ' <br> * page 2384 - page 2385 * | 1,2 | TECHNICAL FIELDS SEARCHED (Int. Cl.5) |
| A | APPLIED OPTICS <br> vol. 17, no. 17, September 1978, <br> pages 2673 - 2674; <br> P.J.SHAYLER: 'LASER BEAM DISTRIBUTION IN THE FOCAL REGION ' <br> * page 2673 - page 2674 * | 1,2 | G01J <br> H01S <br> G01K |

The present search report has been drawn up for all claims

| Place of search | Date of completion of the search | Examiner |
|---|---|---|
| THE HAGUE | 24 SEPTEMBER 1991 | VAN DEN BULCKE E.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document